# EUROPEAN PATENT APPLICATION

(11) **EP 2 274 976 A1**
(43) Date of publication of application: **19.01.2011**
(21) Application number: 10185822.3
(22) Date of filing: 01.11.2005
(51) Int. Cl.: A01K 73/045

(54) **Higher efficiency pelagic trawl door construction**

(30) Priority: 04.11.2004 US 625560 P
(62) Divisional of application: 05806018.7
(71) Applicant: Hampidjan HF, 104 Reykjavik (IS)
(72) Inventor: Vigfusson, Gudmundur, 820, Hveragerdi (IS)
(74) Representative: Patel, Nikesh

(57) **Abstract**

A trawl door (10) for use with a trawl net is provided, the trawl door (10) having leading and trailing edges (12, 261 and 14, 230), an upper section (28) and a lower section (29), the upper section (28) having a main deflector body (24) and the lower section (29) having a main deflector body (25), the upper section's main deflector body (24) having an outer side convex surface (56, 228) and the lower section's main deflector body (25) having an outer side convex surface (56, 228), each main deflector body (24, 25) having a leading edge (42, 231) and a trailing edge (14, 230), the outer side convex surface (56, 228) of the upper section's main deflector body (24) and the outer side convex surface (56, 228) of the lower section's main deflector body (25), respectively, lying in different planes that diverge and having an included angle of less than one hundred eighty degrees, the included angle located between: a) the outer side convex surface (56, 228) of the upper section's main deflector body (24); and b) the outer side convex surface (56, 228) of the lower section's main deflector body (25), the trawl door comprising an aspect ratio being over 2.7:1.

## Description

### Field of the Invention

The present invention relates generally to trawl doors, and more particularly to pelagic trawl doors capable of providing enhanced and rather high efficiency in field operations. Trawl doors of the present invention are capable of significantly reducing the drag of a total trawl system and thus conserving fuel of the fishing trawler, with concurrent increased efficiency.

### Description of the Known Art

The trend in the art in pelagic trawl door design and manufacture is both to provide pelagic trawl doors of maximal efficiency and as well to produce flat trawl doors, as opposed to Vee trawl doors. It is widely believed and thus far unanimously experimentally confirmed that the greatest efficiency obtainable for pelagic trawl doors is by using flat trawl doors, rather than Vee shaped trawl doors. Thus, the trend in the industry to design only flat trawl doors when high efficiency pelagic trawl door constructions employ a flat trawl door construction, rather than a Vee shaped trawl door construction. In fact, in many developed high value pelagic trawl fisheries, such as for example the Alaska Pollock fishery, Vee shaped pelagic trawl doors either are not in use, or are in use in such small numbers as to be insignificant.

As mentioned above, the trend in the art in the engineering, manufacture and use of pelagic trawl doors is to construct and deploy in the field flat trawl door designs with the goal of increasing efficiency, it being widely held if not universally believed in the field that only flat trawl door designs are able to maximise the efficiency of the trawl door's performance. That is to maximise the horizontal spread of a given pelagic trawl net under a given set of conditions from a certain trawler, while minimizing the water resistance (drag) on the certain trawler, thus permitting lower fuel consumption, leading to maximal efficiency of the pelagic trawling operation.

Thus, it may be observed that while the trend in the art is to engineer, manufacture and use flat pelagic trawl door constructions, as opposed to Vee shaped pelagic trawl door constructions, the basis for such a trend is that fact and thus far it is flat pelagic trawl door constructions that have optimised field operation efficiency for pelagic trawlers. In attempting to better address the need for maximal efficiency pelagic trawl doors, wide trawl doors that maximise buoyancy as well as airfoil shaped trawl doors that maximise lift (i.e. thrust) and minimize drag have also been proposed. An example of such a trawl door is that disclosed in US-A-4,640,037 which discloses a trawl door of generally airofoil cross section made from plate material. The door consists of a main deflector having a modified shape to form a plurality of slots along the forward edge of the main deflector in order to contribute to the hydrodynamic properties of the door.

However, it is unusually expensive to manufacture wide trawl doors of steel, plate steel being the primary universal material for pelagic trawl door construction, and likewise it is unusually and even prohibitively expensive to manufacture true optimised airfoil shaped trawl door constructions of steel.

In an attempt to redress these difficulties, currently pending Icelandic Patent Application number 7371 titled: "HIGH SPEED, INCREASED HYDRODYNAMIC EFFICIENCY, LIGHT-WEIGHT MOLDED TRAWL DOOR AND METHODS FOR USE AND MANUFACTURE" proposes the use of a special plastics material that is both capable of withstanding the rigors of field conditions experienced by pelagic trawl doors, unlike previous plastics employed in trawl doors, providing improved buoyancy in water, while simultaneously is capable of being molded into any shape by the placement of a liquid solution into a mold of any shape, the liquid then solidifying into the desired solid plastic having the shape of the mold.

However, while the teachings of currently pending Icelandic Patent Application no. 7371 actually appear to teach a trawl door construction and methods for an optimally efficient pelagic trawl door, it is a fact that the method of manufacturing of such a trawl door is entirely unprecedented, and the start up costs to obtain and to put into production the needed manufacture machinery is too expensive to be useful to the vast majority of pelagic trawl door manufacturers. Additionally, the necessary plastics material itself is proprietary and not currently available to the vast majority of trawl door manufacturers.

Therefore, it may be appreciated that a continuing long felt need exists in the field for a pelagic trawl door construction made from universally available materials and using widely accessible and already in place production machinery and methods, that also is substantially more efficient than known trawl door constructions which also use such universally available materials, widely accessible production machinery and methods.

### DEFINITIONS

ASPECT RATIO: means the Trawl Door Height relative to the Trawl Door Width. For example, a trawl door having a height of two (2) meters and a width of one (1) meter has an Aspect Ratio of 2:1 (two to one).

PROFILE: means the cross sectional shape of a trawl door or of a portion of a trawl door as viewed in a plane perpendicular to the vertical dimension of that portion of the trawl door.

TRAWL DOOR: means any of a variety of essentially rigid structures having generally rigid deflectors (e.g. not formed of a foldable fabric as a kite) and capable of being deployed in a body of water behind a towing vessel, and usually attached at a fore end to a terminal end of a main towing warp or other towing line depending from the towing vessel and at an aft end to another line itself ultimately attached to another towed item. In operation, trawl doors have the function of converting a portion of forward motion and/or energy that is imparted by the towing vessel into horizontally directed force for the purpose of spreading in a generally horizontal orientation a trawl net, seismic surveillance towed array complex, paravene line or the like.

TRAWL DOOR HEIGHT: the height of a trawl door is defined by the shortest distance between the trawl door's upper edge and the trawl door's lower edge. The Trawl Door Height measurement generally does not include any aspect of a purely weight shoe, or the like, but rather relates to the portion of the trawl door's structure that is capable of efficiently generating lift and/or thrust.

TRAWL DOOR WIDTH: the width of a trawl door is defined by the shortest distance between the trawl door leading and trailing edges as taken from a profile of a portion of the trawl door. For trawl doors with straight leading and trailing edges, the width is generally the same anywhere along the vertical dimension of the trawl door. For a trawl door with a "swept back" configuration, the trawl door's width also may be expressed as an average of a sum of several trawl door width measurements taken at various profile locations located at varying positions along the vertical dimension of the trawl door, as such trawl doors typically have narrower widths at their top and bottom extremities than at their central portion.

### OBJECTS OF THE PRESENT INVENTION

It is an object of the present invention to provide for a trawl door that is capable of operating with substantially higher efficiencies than known trawl doors currently on the market.

It is yet another object of the present invention to provide for a trawl door construction permitting more economically lowered water resistance and simultaneously increased trawl mouth horizontal opening (spread) as compared with other known trawl door constructions.

### BRIEF SUBGRY OF THE INVENTION

The present invention provides a trawl door assembly comprising a trawl door comprising first and second door portions each having opposed leading and trailing edges joined by opposed upper and lower edges, the door portions being joined together along facing and lower and upper edges respectively such that they lie in different planes, the ratio of the distance between the free upper and lower edges to the distance between the leading and trailing edges being at least 2:1.

It is preferred to form the trawl door so as to provide an aspect ratio of over 2.4:1. The preferred embodiment of the present invention provides trawl door which includes a lift enhancing structure in the form of two slats with varying slat angles disposed forward of main deflector plate. A trawl door having all these features in combination exhibits, contrary to the state of the knowledge in the field and contrary to the trend in the art, improved efficiency during actual trawling operations when compared to flat trawl doors of any type, and in particular provides for greater trawl spread while simultaneously never before has been achieved.

It has been found that a Vee-shaped trawl door with a 3:1 aspect ratio provides a 50% better performance than existing trawl doors.

### BRIEF DESCRIPTION OF THE DRAWINGS

FIG. 1 is a side view of the inner side surface of a trawl door of the present invention as viewed from a point located on the port side of a starboard trawl door of the present invention.
FIG. 2 is an aspect view of the trawl door shown in Fig. 1 as taken from a point located in front of and looking at the inner side surface of the trawl door of Fig. 1.
FIG. 3 is a plan view of the profile of the trawl door of Fig. 1 as taken along section line 5-5 of FIG. 1.
FIG. 4 is a more detailed view of FIG. 3.
FIG. 5 is a cross-sectional view of a modified form of main deflector useful in the present invention.
FIG. 6 is a cross-sectional view of a trawl door having a main deflector as shown in Fig. 5 with leading and trailing edge structures attached.

### DETAILED DESCRIPTION

A trawl door according to the preferred embodiment of the present invention comprises a Vee-shaped door having a high aspect ratio of at least 2:1 and preferably 3:1 and above.

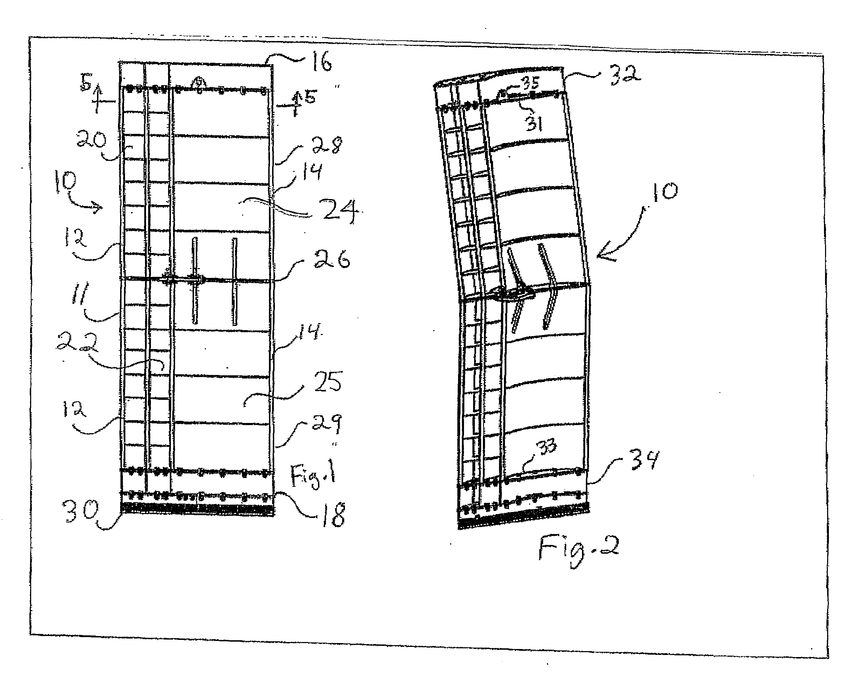

As shown in Figs 1 and 2, trawl door 10 of the present invention includes trawl door leading edge 12, trawl door trailing edge 14, trawl door upper edge 16 and trawl door lower edge 18.

The trawl door is formed by an upper trawl door section 28 and a lower trawl door section 29 joined together by a centre plate 26. Each trawl door section 28,29 is formed by a main deflector body 24,25 and each main deflector body is provided with a leading edge lift enhancing structure in the form of one or more slats 20,22 which form leading edge slots. As shown, two leading edge slats 20,22 are provided in end main deflector body. The leading slat 20 has a leading edge which constitutes the leading edge 12 of the trawl door while trailing slat 22 is situated aft of the leading slat 20 and forward of the leading edge of the main deflector. The trailing edge of the main deflector constitutes the trailing edge 14 of the trawl door.

The slots formed by the leading edge slats 20,22 extend substantially the whole length of the main deflector body of each trawl door section 28,29 and are held in position due to the ends of the slats 20,22 being located in plates 31,33 (Fig. 2) as well as a center plate 26.

Center plate 26 is part of a load bearing frame that assists in transmitting towing loads from the towing vessel to the towed trawl or other item, and upon which is located a towing warp connector (not shown). Detachably affixed to trawl door lower section 29 is variable mass weight plate 30, for aiding in the stabilization of trawl door 10 during field operations by permitting selection of an appropriate amount of weight of the intended altitude in the water column and use of trawl door 10 of the present invention.

As shown in Fig. 2, trawl door 10 is a Vee shaped trawl door, as apparent by the fact that the outer side surface surfaces of upper and lower trawl door sections 28 and 29, respectively, do not lie within the same plane. Rather, each generally lies within planes that generally diverge and/or converge at the center of center plate 26 with an angle less than 180° (one hundred and eighty degrees). In the embodiment shown in Fig. 2, the sections 28, 29 lie in planes which have an included angle of approximately 170°. The leading and trailing edges of the door are straight i.e. not 'swept back' and the included angle is located between the convex surfaces of the main defectors.

It has been found that the aspect ratio of the door is important. We have found that the higher the aspect ratio the better as long as the trawl door remains rigid in use. We have found that with aspect ratio at least 2:1 improved performance of a Vee-shaped door can be achieved. Preferably, the aspect ratio is at least 2.4:1 or 2.5:1. The practical upper limit for a trawl door made of plate material i.e. of uniform thickness, is of the order of 6:1. As a result, we prefer to use aspect ratios of 3:1 and above with at least 3.2:1 or 3.3:1 being preferred. However, we would prefer to use at least 4:1 or 5:1. It has been found that as the aspect ratio increases, it may be necessary to decrease the included angle between the sections 28, 29.

As also shown in Fig. 2, trawl door 10 of the present invention also includes optional upper extension piece 32 attached to upper trawl door section 28, and optional lower extension piece 34 attached to lower trawl door section 29. The extension pieces are detachably attached to the remainder of trawl door 10, thus permitting varying the amount of lift and/or thrust generating structure of trawl door 10 of the presents invention. It will be appreciated that were an upper extension piece 32 to be added but not lower extension piece, or vice versa, the center plate 26 will not be located equidistant the upper and lower edges of the trawl door. Should upper and lower extensions pieces 32 and 34 be removed, then the upper and lower edges 16 and 18 would change positions, and become generally flush with upper and lower load bearing plates 31 and 33, respectively.

Hoisting ring 35 is located upon upper load bearing plate 31 for the purpose of providing an easily accessible connection point for the securing and lifting of trawl door 10, such as may occur during transport, positioning aboard the vessel and storage.

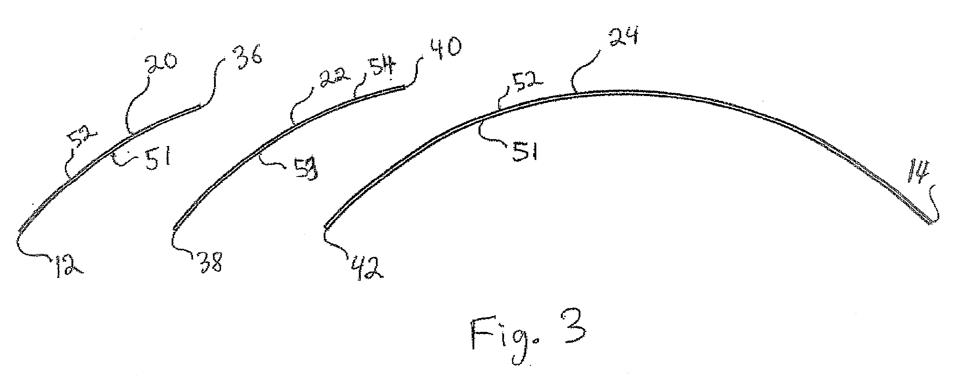

Fig. 3 shown the cross section of trawl door 10 of the present invention as taken along section line 5-5 of Fig. 1. As no other substantial structural bodies are present in the cross section of trawl door 10 at the precise location of section line 5-5, a clean view of the profile of trawl door 10's primary lift and/or thrust generating structures are shown.

As shown, leading slat 20 includes a leading slat leading edge 12 that is also trawl door leading edge 12. Leading slat 20 also includes a leading slat trailing edge 36, leading slat inner side surface 51 and leading slat outer side surface 52.

Similarly, trailing slat 22 includes trailing slat leading edge 38, trailing slat trailing edge 40, trailing slat inner side surface 53 and trailing slat outer side surface 54.

Similarly again, main deflector 24 includes main deflector leading edge 42, main deflector trailing edge 44, main deflector inner side surface 51 and main deflector outer side surface 52.

The main deflector 24 and slates 20 and 22 are all formed from plate material, preferably steel. The main deflector is an arc of a circle. Consequently, the inner and outer surfaces of each member have the same curvature. Preferably the slats are also arcs of circles and even more preferably the same circle as that of the main deflector

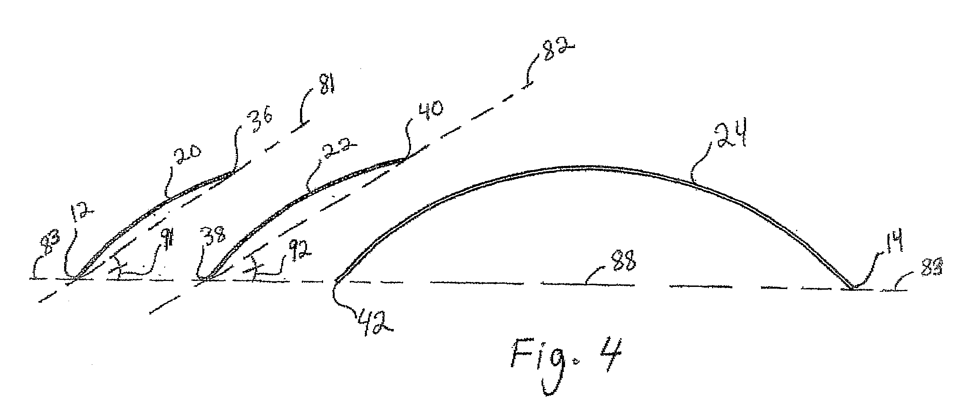

Fig. 4 is a more descriptive view of Fig. 3:
In further reference to Fig. 4, lying within a plane that is perpendicular to the long (and vertical) dimension of trawl door 10 at section line 5-5, and that is as well co-planar to that portion of trawl door 10 at whatever point the profile of the trawl door 10 is viewed, are imaginary straight dashed lines 82, 82, and 83.

Imaginary straight dashed line 81 joins leading and trailing edges 12, 36 of leading slat 20. Imaginary straight dashed line 82 joins leading and trailing edges 38, 40 of trailing slat 22. Imaginary straight dashed line 83 joins the trawl door leading and trailing edges 12, 14 as well as the leading edges 38, 42 of the trailing slate 22 and main deflector 24, respectively.

Reference numeral line 91 indicates a "leading slat angle". The leading slat angle is defined as the angle of convergence of imaginary straight dashed lines 82 and 83 on that side of imaginary straight dashed line 83 that is most proximal the inner side surface 51 of leading slat 20. That is, and in other words, the leading spoiler angle is defined as the acute angle made by the convergence of a first imaginary line connecting the shortest distance between leading and trailing edges 12, 36 of leading slate 20 with a second imaginary line connecting the shortest distance between leading and trailing edges 12, 14 of trawl door 10, as taken in a same plane, and co-planar to a profile of trawl door 10.

Similarly, reference numeral 92 indicates a "trailing slat angle". The trailing slat angle is defined as the angle of convergence of imaginary straight dashed lines 82 and 83 on that side of imaginary straight dashed line 83 that is most proximal the inner side surface 53 of trailing slat 22. That is, and in other words, the trailing slat angle is defined as the acute angle made by the convergence of a first imaginary line connecting the shortest distance between leading and trailing edges 38, 40 of trailing slat 22 with a second imaginary line connecting the shortest distance between leading and trailing edges 12, 14 of trawl door 10, as taken in a same plane, and co-planar to a profile of trawl door 10.

In the instant example of trawl door 10 of the present invention, the "main deflector angle" is zero. That is because the main deflector angle, as defined by the acute angle created by the divergence of an imaginary straight line joining the leading and trailing edges 12, 14 of trawl door 10 from the imaginary straight line 88 which joins the leading and trailing edges 42, 14 of main deflector 24, is coaxial (as well as parallel), and thus its angle of convergence and/or divergence is zero degrees. However, some variants of trawl door 10 of the present invention may be proposed where there exists a main deflector angle that is greater than zero.

The actuate length of the slat 20, i.e. the distance between the leading and trailing edges of the slat 20 is such that the trailing edge 36 of the slat 20 is on the tangent plane of the main deflector 24 which is parallel to the dashed line 88 while the trailing edge 40 of the slat 22 extends beyond this tangent plane.

In order to make a presently preferred embodiment of trawl door 10 of the present invention, trawl door 10 of the present invention is a Vee-shaped trawl door, which includes two trawl door sections 24, 25 mounted at an angle with respect to each other such that the included angle is approximately 170°:and preferably 173°. Each door section comprises:
a leading slat 20, a trailing slat 22 and a main deflector, wherein:
   (i) the leading slat angle 91 is greater than the trailing slat angle 92;
   (ii) the trailing slat angle is at least thirty degrees, and preferably thirty one degrees;
   (iii) the leading slat angle is at least thirty two degrees, and preferably thirty four degrees.
   (iv) a width of the main deflector (as defined by the shortest distance between main deflector leading and trailing edges 42, 14 as taken from a profile of a portion of the trawl door) that is equal to two thirds (0.666) of the width of the trawl door, when viewed in the same profile as the width of the trawl door, and at least within plus or minus five percent (5%) of two thirds (0.666) of the width of the trawl door.
   (v) a shortest distance from leading slat leading edge 12 to main deflector leading edge 42 that, when viewed in the same profile, is 1/3 (one third) of the width of the trawl door, or within plus or minus seven percent (7%) of one third (1/3) of the trawl door;
   (vi) the trawl door has an aspect ratio (trawl door height relative to trawl door width) of at least 2.4:1 (two point four to one) and preferably 2.5:1 (two point five to one) or greater, with 2.7:1 (two point seven to one) or greater being preferred, and with up to and exceeding 4:5:1 (four point five to one) being useful; and
   (vii) a radius of
      a) the main deflector;
      b) the leading slat 20; and
      c) the trailing slat 22,
   each are equal to or generally equal to ½ (one half) the distance of the width of trawl door 10 when compared in the same view of a same profile, and are at least within plus or minus five percent (5%) of ½ (one half) the distance of the width of the trawl door.

Such an embodiment of a trawl door 10 of the present invention has shown in direct scale modelling to create significantly greater trawl mouth spread for a given amount of drag. Surprising, unexpectedly and contrary to the state of the art as well as contrary to the state of knowledge in the field, the spreading forces generated by such a trawl door construction of the present invention as well as the distribution and magnitude of the spreading forces is maximised by the use of a Vee shaped construction for a trawl door 10 of the present invention made in the fashion described above. In fact, a Vee shaped construction of the trawl door 10 of the present invention has been shown to provide the greatest trawl net speed, while simultaneously providing for less drag, thus simultaneously permitting greater vessel spread, despite the fact that such result is contrary to the trend in the industry to engineer, manufacture and employ flat pelagic trawl door constructions wherever maximal efficiency of pelagic trawling operations is desired.

Because the main deflector bodies and slats are all made from plate material and are arcs of a circle, they can each be manufactured in a cost-effective manner and the door sections each assembled without the need for specialist tools.

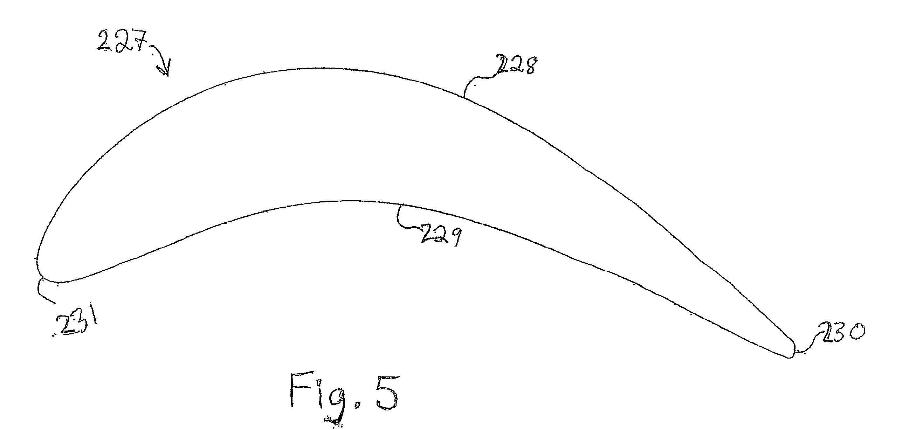

A modification to the trawl door shown in Figs 1 and 2 which can usefully be made is for the main deflector portions to have an aerofoil cross-section rather than being an arc of a circle. The main defector can still be made of plate material as in the previous embodiment but a further modification is to make each main deflector portion 227 with differently curved convex and concave surfaces as shown in Fig 5. This is preferably achieved by utilising synthetic materials which are moulded to form a light-weight high strength trawl door as disclosed in our earlier International application number PCT/IS2005/000016 the contents of which are herein incorporated by way of reference.

FIG. 5 shows to scale or essentially to scale a modified profile 227 of a main deflector body of a trawl door 1 of the present invention, as used in the instant example of the trawl door of the present invention to form the profiles of upper and lower main deflector bodies. The complete shape and teachings of the profile 227 shown in FIG. 5 are the same as the profile for that maximally efficient low-speed high-lift airfoil profile having its profile known by the name and/or code 'NACA-338117' as found in the Visual Foil Version 4.1' by Hanley Innovations (Ocala Florida, USA). None of the known art has suggested using this profile in any portion of known trawl doors.

In further description, profile 227 includes convex outer side 228, concave inner side 229, trailing edge 230 and leading edge 231. The widest point of the profile 227 is approximately seventeen percent to eighteen percent (17% to 18%) of the length of the profiles chord, and is at least eleven percent (11%) of the length of the profiles chord, and is located front of center of the profile's chord. Preferably, the widest point of the profile is located at a point along the profiles chord that corresponds to a distance that is front of center of the chord by at least three percent 3% of the chord's length.

As noted in Fig. 1, disposed forward of the leading edge 31 of a main deflector body of any deflector body of the present invention, is a lift enhancing arrangement. Preferably, at least one slat is employed with any main deflector body of the present invention having the profile taught hereinabove. None of the known art has suggested using slats in combination with a deflector body having a profile similar to the shape of the profile taught herein as most preferred for the shape of the profile of any main deflector body for use in a trawl door of the present invention.

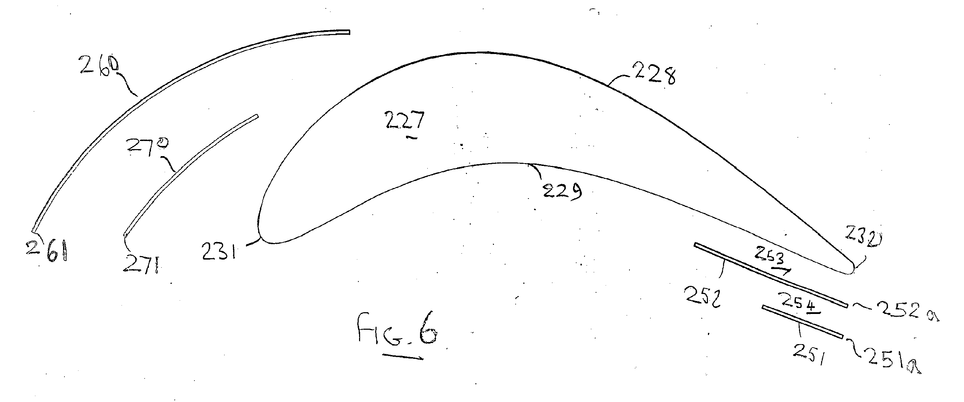

As shown in Fig. 6, an upper forward leading slat 260 has a profile generally the same as the profile of the outer 228 of the main deflector body portion at an area proximal the widest point of the profile 227 and is held spaced from the leading edge 231 by being fixed into the end plates with the leading edge 261 of the slat 260 in line with the leading edge 231 of the body portion. As shown, the leading edge 261 of the slat 260 in line with the leading edge 231 of the body portion. As shown, the leading edge 261 of the slat 260 is spaced from the leading edge 231 by the same distance as the leading edge 31 is spaced from the widest point of the profile 227. The length of the slat 260 is such that it is above the top surface of the profile 227 and because of the differences in profile as between the slat 260 and the portion of the profile 227 between its leading edge and the top of the profile 227, a slot is formed along the length of the leading edge 31. The slot diminishes in area as one moves from the leading edge 231 along the profile 227 and this formation channels water flowing through the slot to energise the boundary layer about the profile 227 and retain separation of the boundary layer which increases lift.

It is preferred to further accentuate this lift by adding an upper forward trailing slat 270. This slat 270 is located in the slot formed by the seat 260 and has a leading edge 271 in line with the leading edges 261 and 237 as well as a profile which is generally the same as the profile of the outer side 228 at an area defined as rearward of the leading edge 231 but forward of the widest point of the profile 227. the slat 270 thus divides the slot along the leading edge 231 into two which enhances the energisation of the boundary layer. The slat 270 is shorter than the slat 260 being about 50% of the length of the slat 260 and so does not extend above the top surface of the profile 227.

Fig 6 also shows a modification which maybe made to the trawl door as shown in Fig 1. This modification comprises the provision of a trailing edge lift enhancing structure in the form of one or more trailing edge slats 251 and 252 located under the profile 227 which form inner and outer trailing edge slots 253, 254. The trailing edge slat or slats 251, 252 are generally flat and extend along the length of the trailing edge 230 and are fixed to the end plates. They lie generally parallel of the portion of the concave inner side 229 proximal the trailing edge 236 of the profile 227. The slat 251 is approximately half the length of the slat 252 and their trailing edges 251a, 252a are generally aligned with the trailing edge 230 of the profile 227. These slats maintain the boundary layer effects of the water on the concave inner side 229 of the profile which also enhances the performance of the profile 227.

It is to be understood that each body portion of the trawl door will be provided with the leading edge slat arrangement shown in Fig 5 and may be also provided with the trailing edge slat arrangement if desired. What is done for one trawl door is done to the other in order to generate stable conditions.

Such a construction of a trawl door of the present invention has been shown to be useful in field operations when the angle of attack of the trawl door is 18 (eighteen) degrees, allowing much reduced drag. Similarly, while at conventional angles of attack used with known trawl doors, a Vee-shaped trawl door construction with 3:1 aspect ratio produces at least 50 (fifty) percent greater efficiency than any other known trawl door constructions. These superior results lead to substantially greater efficiency of fishing operations and have never been achieved by known trawl door constructions.

In addition to the claimed embodiments in the appended claims, the following is a list of additional embodiments which may serve as the basis for additional claims in this application or in subsequent divisional applications:
1. A trawl door comprising first and second door portions each having opposed leading and trailing edges joined by opposed upper and lower edges, the door portions being joined together along facing and lower and upper edges respectively such that they lie in different planes, the ratio of the distance between the free upper and lower edges to the distance between the leading and trailing edges being at least 2:1.
2. A trawl door according to embodiment 1 wherein the ratio is at least 2.4:1.
3. A trawl door according to embodiment 1, wherein the ratio is at least 2.75:1.
4. A trawl door according to embodiment 1, wherein the ratio is at least 3:1.
5. A trawl door according to embodiment 1, wherein the ratio is at least 4:1.
6. A trawl door according to embodiment 1 wherein the ratio is 6:1.
7. A trawl door according to any one of the embodiments 1 to 6 wherein the different planes in which the door portions lie have an included angle of 170° at least.
8. A trawl door according to embodiment 7 wherein the included angle is 173°.
9. A trawl door according to any one of the embodiments 1 to 8 wherein each door portion includes a main deflector portion which is an arc of a circle in cross-section.
10. A trawl door according to any one of the embodiments 1 to 8 wherein each door portion includes a main deflector portion which is an aerofoil shape in cross-section.
11. A trawl door according to embodiment 10 wherein each main deflector portion has concave and convex surfaces of different shape.
12. A trawl door according to embodiments 9 or 10 wherein each main deflector portion is made of plate material.
13. A trawl door according to any one of embodiments 1 to 12 wherein each trawl door portion includes a lift enhancing structure forward of the main deflector portion, the lift enhancing structure constituting the leading edge of the respective door portion.
14. A trawl door according to embodiment 13 wherein the lift enhancing structure comprises at least one slat.
15. A trawl door according to embodiment 14 wherein the at least one slat is made of plate material.
16. A trawl door according to embodiments 14 or 15 wherein the at least one slat has a cross-sectional shape which corresponds to a portion of the shape of the main deflector portion.
17. A trawl door according to anyone of embodiments 13 to 16 wherein the lift enhancing structure is disposed forward of the main deflector by a distance equal to 1/3 the width of the trawl door.
18. A trawl door according to anyone of the embodiments 1 to 17 and comprising extension pieces attached to the free ends of the door portions, each extension piece corresponding in shape and construction to the shape and construction of the main deflector portions.
19. A method of making a trawl door comprising forming first and second door portions each having opposed leading and trailing edges joined together by upper and lower edges, the door potions being joined together along opposed upper and lower edges, and disposing the door portions such that they lie in different planes, the door portions being dimensioned such that the ratio of the distance between the three upper and lower edges to the distance between the leading and trailing edges being at least 2.4:1.
20. A method according to embodiment 19 wherein the door portions are formed separately and are joined together alongside opposed edges by being attached to a center plate.
21. A method according to embodiments 19 or 20, wherein the door portions are dimensioned so as to create said ratio as 6:1.
22. A method according to embodiments 19, 20 or 21 wherein the different planes in which the door portions lie have an included angle of 170° (degrees) at least.
23. A method according to embodiment 22 wherein the included angle is 173°.
24. A method according to any one of embodiments 19 to 23 wherein each door portion comprises a main deflector portion and the method comprises a step of forming the main deflector portion as an arc of a circle.
25. A method according to any one of embodiments 19 to 23 wherein each door portion comprises a main deflector portion and a method comprises the step of forming the main deflector portion as airofoil shape in cross-section.
26. A method according to embodiment 25 wherein each main deflector portion is manufactured so as to have concave and convex surfaces of different shape.
27. A method according to embodiments 24 or 25 wherein each main deflector portion is made of plate material.
28. A method according to any one of embodiments 19 to 27 wherein each trawl door portion includes a lift enhancing structure forward of the main deflector portion, the lift enhancing structure instructing the leading edge of the respective door portion.
29. A method according to embodiment 28 wherein the lift enhancing structure comprises at least one slat.
30. A method according to embodiment 29 wherein the at least one slat is made of plate material.
31. A method according to embodiments 29 or 30 wherein the at least one slat has a cross-sectional shape which corresponds to the shape of its associated main deflector portion.
32. A method of forming a trawl door according to any one of embodiments 19 to 31, and comprising attaching extension pieces to the free ends of the door portions, the extension pieces corresponding in shape and construction to their associated main deflector portions sections of door.

## Claims

1. A trawl door (10) for use with a trawl net, the trawl door (10) having leading and trailing edges (12, 261 and 14, 230), an upper section (28) and a lower section (29), the upper section (28) having a main deflector body (24) and the lower section (29) having a main deflector body (25), the upper section's main deflector body (24) having an outer side convex surface (56, 228) and the lower section's main deflector body (25) having an outer side convex surface (56, 228), each main deflector body (24, 25) having a leading edge (42, 231) and a trailing edge (14, 230), the outer side convex surface (56, 228) of the upper section's main deflector body (24) and the outer side convex surface (56, 228) of the lower section's main deflector body (25), respectively, lying in different planes that diverge and having an included angle of less than one hundred eighty degrees, the included angle located between:
a) the outer side convex surface (56, 228) of the upper section's main deflector body (24); and
b) the outer side convex surface (56, 228) of the lower section's main deflector body (25),
the trawl door comprising an aspect ratio being over 2.7:1.

2. The trawl door (10) of claim 1 further including:
(i) a trailing slat (22, 260) having a leading edge (12, 38, 261, 271) and a trailing edge (36,40);
(ii) a profile for a portion of the trawl door where:
a) the trailing slat's leading edge is disposed forward of the leading edge of a main deflector body (24, 25);
b) the trailing slat (22, 260) has a curvature; and
c) the trailing slat (22, 260) has an acute angle made by a convergence of:
(ia) a first imaginary straight line (81, 82) connecting leading and trailing edges (12, 36 and 38, 40) of the trailing slat (22, 260); and
(ib) a second imaginary straight line (83) joining leading and trailing edges (12, 261 and 14, 230) of the trawl door,
the portion of the trawl door having the profile being configured so that the line joining leading and trailing edges (12, 14) of the trawl door and a line (88) joining leading and trailing edges (42, 14) of the main deflector body are not coaxial.

3. The trawl door according to claim 2 where the trawl door further comprises a leading slat (20), the leading slat (20) including an acute angle made by a convergence of:
(a) a first imaginary straight line (81) connecting leading and trailing edges (12, 36) of the leading slat (20); and
(b) the second imaginary straight line (83) joining leading and trailing edges (12, 261 and 14, 230) of the trawl door,
the portion of the trawl door having the profile being further configured so that the leading slat's leading edge is disposed forward of the leading edge of the main deflector body.

4. The trawl door according to claim 3 wherein the portion of the trawl door having the profile is configured so that the angle of the trailing slat (22, 260) differs from the angle of the leading slat (20).

5. The trawl door according to any one of claims 3 to 4 wherein the portion of the trawl door having the profile is configured so that the leading slat's angle is greater than the trailing slat's angle.

6. The trawl door according to any one of claims 3 to 5 wherein the portion of the trawl door having the profile is configured so that the trailing slat's leading edge is more proximal the main deflector body's leading edge than is the leading slat's leading edge.

7. The trawl door according to any one of claims 3 to 6 wherein the portion of the trawl door having the profile is configured so that the leading slat's leading edge forms the leading edge of the trawl door.

8. The trawl door (10) according to any one of claims 1 to 6 wherein the ratio is selected from a group consisting of:
a) at least 2.75:1; and
b) at least 3:1.

9. The trawl door according to any one of claims 2 to 8 wherein the portion of the trawl door having the profile is configured so that the trailing slat's angle is at least 30 degrees.

10. The trawl door according to any one of claims 3 to 8 wherein the portion of the trawl door having the profile is configured so that the angle of the trailing slat (22, 260) is at least 30 degrees and the angle of the leading slat (20) is at least 32 degrees.

11. The trawl door (10) according to any one of claims 2 to 10 wherein the portion of the trawl door having the profile is configured so that the trailing slat (22, 260) has a cross-sectional shape being selected from a group consisting of:
a) a cross-sectional shape including a cambered inner surface (53);
b) a cross-sectional shape including an arc of a circle;
c) a cross-sectional shape where at least a portion of the trailing slat's inner and outer surfaces (53, 54) have the same curvature; and
d) a cross-sectional shape which corresponds to a portion of a cross sectional shape of the main deflector body (24, 25), and the main deflector body (24, 25) includes a profile being selected from a group consisting of:
i) a profile having a concave cambered inner side (229);
ii) a profile having an airfoil shape;
iii) a profile having both concave and convex surfaces of different shape; and
iv) a profile including a convex outer side and a concave inner side and the widest point of the profile is located front of centre of the profile's chord.

12. The trawl door (10) according to any one of claims 2 to 11 wherein the trawl door is configured so that a radius of a profile of a portion of the trawl door being selected from a group consisting of:
(i) the portion of the trawl door being the main deflector body; and
(ii) the portion of the trawl door being the trailing slat (22, 260),
is a radius that is within 5% of being 1/2 of the width of the trawl door (10).

13. The trawl door (10) according to any one of claims 3 to 12 wherein the portion of the trawl door having the profile is configured so that a value of an acute angle made by a divergence of the line joining leading and trailing edges (12, 14) of the trawl door from the line (88) joining leading and trailing edges (42, 14) of the main deflector body is a value greater than zero.

14. The trawl door (10) according to any one of claims 3 to 12 wherein the portion of the trawl door having the profile is configured so that the trailing edge (40) of the trailing slat (22, 260) extends beyond a tangent plane of the main deflector body, the tangent plane being parallel to imaginary straight line (88) joining leading and trailing edges (42, 231 and 14, 230) of the main deflector body.

15. The trawl door (10) according to any one claims 2 to 14 wherein the portion of the trawl door having the profile is configured so that a distance between leading and trailing edges (42, 231 and 14, 230) of the main deflector body is greater than a distance between leading and trailing edges (12, 36 and 38, 40) of the trailing slat (22, 260).

16. The trawl door (10) according to any one of claims 2 to 15 wherein the portion of the trawl door having the profile is configured so that a distance between the leading edge of the trailing slat (22, 260) and the leading edge of the main deflector body (24, 25) is within 7% of being 1/3 of the distance of the width of the trawl door (10).
